# FASCICULE DE BREVET EUROPEEN

(11) **EP 2 322 342 B1**
(45) Date de publication et mention de la délivrance du brevet: **13.02.2013**
(21) Numéro de dépôt: 10191298.8
(22) Date de dépôt: 16.11.2010
(51) Int. Cl.: B29C 70/38

(54) **Machine pour le drapage de pièces composites cylindriques**
Maschine zum Einwickeln von zylindrischen Verbundwerkstücken
Machine for wrapping cylindrical composite parts

(30) Priorité: 17.11.2009 FR 0958089
(43) Date de publication de la demande: 18.05.2011
(73) Titulaire: Airbus Operations (S.A.S.), 31060 Toulouse (FR)
(72) Inventeur: De Mattia, Denis, 44115 Basse Goulaine (FR)
(74) Mandataire: Hamann, Jean-Christophe

(56) Documents cités:
- FR-A1- 2 894 870
- JP-A- 63 025 266
- US-A- 3 970 831

## Description

L'invention appartient au domaine des machines à draper pour la réalisation de pièces en matériau composite. Plus particulièrement la machine à draper objet de l'invention est adaptée au drapage de pièces cylindriques de section quelconque. De telles pièces constituent, par exemple, des tronçons de fuselage d'aéronef.

Le drapage consiste à déposer des bandes de matériau composite, généralement pré-imprégnées de résine, sur un gabarit, ou mandrin, reproduisant la surface de la pièce à réaliser. Lesdites bandes de matériau composite sont généralement stockées sous forme de rouleaux. Elles sont déroulées et plaquées à la surface du mandrin par une tête de drapage qui se déplace sur ladite surface à une vitesse d'avance contrôlée, dite avance travail, selon des directions correspondant à l'orientation de la couche de matière déposée. Selon des modes de réalisation connus de l'art antérieur, la tête de drapage supporte d'autres fonctions que la dépose comme des moyens de découpe des bandes.

Les têtes de drapage permettant des productivités élevées, notamment par la dépose de bandes larges, sont des éléments très volumineux qui doivent être supportés par une structure de rigidité adaptée pour assurer la précision de placement des bandes, particulièrement si le déplacement de la tête de drapage sur le mandrin est réalisé suivant des cinématiques complexes comprenant 5 axes ou plus de déplacement. La demande de brevet FR2919517 décrit un exemple de tête de drapage adaptée à ce type de réalisation.

Selon l'art antérieur, la réalisation de la peau d'un fuselage d'aéronef en matériau composite fait appel essentiellement à deux solutions technologiques. La première, décrite par exemple dans la demande de brevet EP1963079/US2009020645 au nom de la demanderesse, consiste à réaliser des tronçons sensiblement cylindriques par le drapage de plis selon toute la circonférence dudit fuselage. Le procédé de drapage généralement utilisé pour ce type de réalisation utilise un mandrin reproduisant la forme du tronçon à réaliser, lequel mandrin est mis en rotation devant des moyens de dépose du matériau aptes à se déplacer selon au moins un axe parallèle à l'axe de rotation du mandrin. Ledit mandrin tourne alors autour de son axe, toujours dans le même sens de rotation et à vitesse sensiblement constante.

La seconde solution, décrite dans la demande EP2076430, également au nom de la demanderesse, consiste à réaliser les tronçons de fuselage par l'assemblage de panneaux composites de grande dimension, à la fois de grande longueur et couvrant un secteur angulaire de 90° ou plus. La réalisation individuelle de tels panneaux par le précédent procédé, implique d'inverser le sens de rotation du mandrin pour effectuer le drapage d'un bord à l'autre du panneau. Ces inversions de sens de rotation sont complexes à réaliser avec des mandrins de grande dimension du fait de leur inertie. Même en combinant plusieurs panneaux sur un même mandrin afin de couvrir un secteur angulaire de 360° et limiter le nombre d'inversion de sens de rotation, la grande longueur du mandrin adapté à cette réalisation rend sa fabrication coûteuse et complexe si celui-ci doit être mis en rotation compte tenu de son poids. Ce poids et cette inertie limitent par ailleurs la vitesse de rotation dudit mandrin donc la vitesse d'avance travail de dépose et par conséquent la productivité de ce procédé de drapage.

Le poids d'un tel mandrin, adapté à sa mise en rotation, nuit à la précision de dépose car le mandrin tend à se déformer sous son poids propre. La solution d'utiliser un mandrin fixe et de déplacer la tête de drapage sur celui-ci est également complexe de mise en oeuvre, lorsque le diamètre de la pièce est important, en particulier avec les machines-outils de l'art antérieur dont la cinématique est basée sur des déplacements suivant un système cartésien. En effet, une telle configuration entraîne, si l'axe du cylindre du mandrin est disposé horizontalement, des besoins en termes de courses notamment au niveau de l'axe vertical de la machine très importants ce qui rend la réalisation d'une telle machine coûteuse et complexe. Par ailleurs, cette solution cinématique, même en utilisant une tête de drapage articulée, ne permet pas, en général, d'atteindre des couvertures angulaires supérieures à 180° de la partie cylindrique tout en conservant la tête orientée normalement à la surface lors du drapage. Finalement le parcours de la surface nécessite un déplacement selon 6 axes simultanés afin de placer la tête de drapage dans l'espace en position et en orientation. Le support de la tête de drapage, lourde et encombrante, à l'extrémité d'une structure procurant une cinématique comportant 6 axes est complexe et pose des problèmes techniques lié à la rigidité d'un tel montage.

On connaît de l'art antérieur, par exemple du brevet US1783637, des machines pour l'usinage de pièces cylindriques pesantes, notamment en tournage, dans lesquelles la pièce est placée sur un plateau fixe et où l'outil se déplace selon une piste de guidage circulaire autour de la pièce afin de réaliser l'usinage. Cette configuration n'est toutefois pas adaptée au cas du drapage de pièces composites tels que les panneaux de fuselage dont le diamètre est faible par rapport à la longueur et dont le secteur angulaire couvert par la surface est inférieur à 360° et même à 270°. Le mandrin adapté à la réalisation d'une telle pièce serait en effet très difficile à maintenir en position verticale stable. Ces machines ne sont pas non plus adaptées à des opérations de drapage car elles ne disposent pas d'un nombre d'axes suffisant pour déplacer et orienter dynamiquement la tête de drapage par rapport à la surface du mandrin et elles restent limitées à la réalisation de surfaces cylindriques de révolution.

On connaît également de l'antérieur, par exemple du brevet US 3 970 831, une machine-outil adaptée au drapage de plis d'un matériau composite caractérisée en ce qu'elle comprend :
- Une table fixe définissant un plan de base, apte à recevoir un mandrin de drapage
- Un portique s'étendant dans un plan perpendiculaire au plan de base et apte à se déplacer selon un axe longitudinal rectiligne perpendiculaire au plan du portique et parallèle au plan de base comprenant une piste de guidage d'un porte effecteur, laquelle piste comportant une portion circulaire de rayon fini dont l'axe de giration est parallèle à l'axe longitudinal;
- Un porte-effecteur apte à supporter une tête de drapage et apte à se déplacer à une vitesse d'avance travail dans le plan du portique le long de la piste, placé entre la piste et la table.

Il existe donc un besoin pour un dispositif de drapage économique en coût d'immobilisation pour la réalisation de panneaux cylindriques de grande dimension en matériau composite couvrant un secteur angulaire inférieur à 360° et autorisant une productivité de dépose élevée .

Dans l'ensemble de ce texte, sauf indication particulière le terme « cylindre » et l'adjectif « cylindrique » doivent être compris dans leurs sens mathématiques, à savoir :
- Un cylindre est une surface dans l'espace définie par une droite génératrice parcourant une courbe génératrice plane fermée quelconque en gardant une direction fixe. La courbe génératrice de ce cylindre n'est donc pas nécessairement circulaire et la surface de ce cylindre n'est donc pas nécessairement une surface de révolution
- On qualifie de cylindrique une portion de surface ou de volume d'un cylindre répondant à la définition ci-dessus
- Selon cette définition une surface cylindrique est dite développable car elle peut être plaquée sur un plan en conservant les distances mesurée sur ladite surface entre les points la constituant

Afin de répondre à ces besoins, le dispositif de l'invention comprend:
- Une table fixe définissant un plan de base, apte à recevoir un mandrin de drapage
- Un portique s'étendant dans un plan perpendiculaire au plan de base et apte à se déplacer selon un axe longitudinal rectiligne perpendiculaire au plan du portique et parallèle au plan de base
- Un porte-effecteur apte à supporter une tête de drapage et apte à se déplacer à une vitesse d'avance travail dans le plan du portique le long d'une piste, ladite piste comportant une portion circulaire de rayon fini dont l'axe de giration est parallèle à l'axe longitudinal et placé entre la piste et la table

Ainsi le dispositif de l'invention permet de placer un mandrin cylindrique fixe sur la table de la machine et de déplacer la tête de drapage sur la surface de ce mandrin, l'effecteur supportant la tête de drapage suivant la piste sur le portique.

Avantageusement la piste s'étend sur un secteur angulaire supérieur à 180°. Cette configuration permet déplacer la tête de drapage le long de cette piste pour couvrir une surface de drapage cylindrique couvrant un tel secteur angulaire sans avoir besoin d'effectuer de mouvement de large amplitude sur les autres axes de la machine. On obtient ainsi des vitesses tangentielles de déplacement sur la surface du mandrin et donc des productivités de dépose comparables à ce qu'il est possible d'obtenir en drapage plan. Par ailleurs le porte effecteur ne comprend alors que 2 axes de rotation au lieu des 3 nécessaires selon l'art antérieur ce qui confère au montage plus de rigidité et de précision.

Pour obtenir de telles performances dans le respect de la précision des trajectoires, le déplacement du porte-effecteur par rapport au portique est de préférence réalisé par un moteur linéaire suivant la piste.

Selon un premier mode de réalisation le porte effecteur comprend un axe de déplacement rectiligne de l'effecteur, dit axe W, parallèle au plan du portique et perpendiculaire à la piste. Cette configuration permet de réaliser le drapage de tout type de surfaces cylindriques dont la normale en chaque point est sensiblement colinéaire à l'axe W lorsque la tête de drapage est placée en ce point par le déplacement des axes de la machine. Dans ce cas, le drapage suit les circonférences, c'est-à-dire que le sens long des bandes déposées est orienté à 90° par rapport à l'axe du cylindre.

Pour réaliser des drapages plus complexes selon ce premier mode de réalisation, le porte-effecteur peut comporter un axe de déplacement rotatif de l'effecteur autour de l'axe W. Cette configuration permet d'orienter la tête pour effectuer des drapages parallèles ou en bais par rapport à l'axe du cylindre, la normale de la surface réalisée étant toujours sensiblement colinéaire à l'axe W.

Pour effectuer un drapage sur une surface cylindrique quelconque et une direction de drapage quelconque, le porte-effecteur comprend un dispositif de déplacement de l'effecteur selon au moins deux axes de rotation et une translation selon un axe perpendiculaire à la piste et parallèle au plan du portique.

Ce premier mode de réalisation correspond au déplacement de la tête de drapage par un dispositif à chaîne cinématique ouverte ou série.

Alternativement, selon un second mode de réalisation, le déplacement de la tête de drapage au niveau du porte-effecteur peut être réalisé, au moins pour certains degrés de liberté, par une chaîne cinématique fermée ou parallèle. Cette configuration confère à l'effecteur une rigidité dynamique accrue.

L'invention sera maintenant plus précisément décrite dans le cadre de modes de réalisation préférés, nullement limitatifs, représentés sur les figures 1 à 5 dans lesquelles :
- la figure 1 relative à l'art antérieur représente une machine à draper de type portique apte à la réalisation de pièces de grande dimension ;
- la figure 2 montre en perspective un exemple de réalisation de l'invention sous la forme d'une machine dont les portiques sont de forme annulaire ;
- la figure 3 illustre en vue de face un mode de réalisation généralisé de l'invention selon une cinématique série;
- la figure 4 monte une alternative de réalisation de l'invention faisant appel à un dispositif de déplacement de l'effecteur utilisant une chaîne cinématique parallèle fermée ;
- la figure 5 illustre une variante de réalisation de l'entraînement du
   porte-effecteur le long du portique.

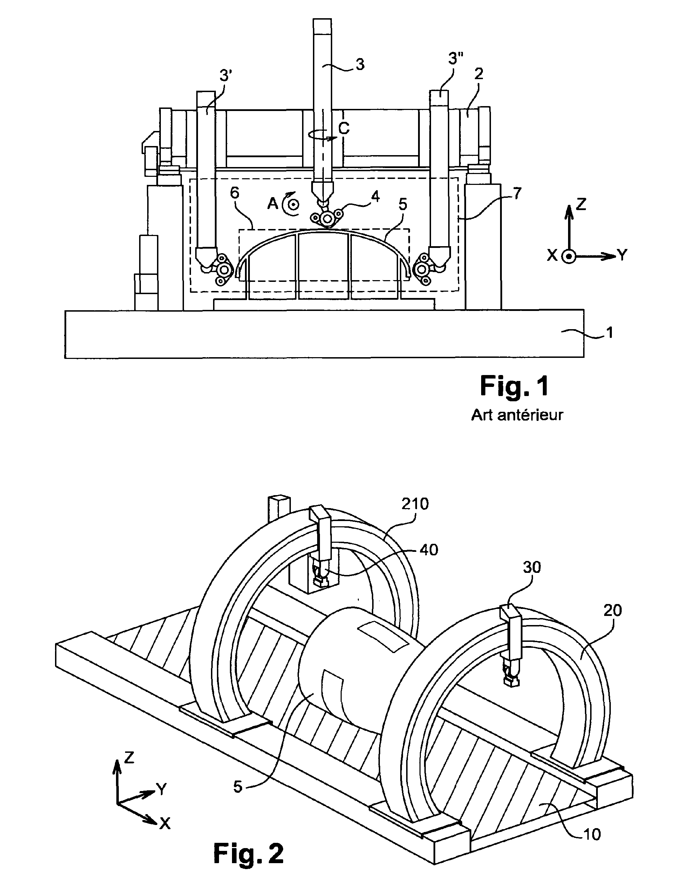

   Figure 1, selon l'art antérieur, les machines à draper construites selon une architecture de mouvements cartésiens, se composent :
- d'une base (1) ou table, s'étendant selon un plan XY,
- sur laquelle se déplace un portique selon l'axe X, ledit portique comprenant une traverse (2) parallèle à l'axe Y
- un porte-effecteur (3) s'étendant selon l'axe Z et se déplaçant le long de la traverse.
- Ledit porte-effecteur supporte une tête de drapage (4)
- La tête de drapage est le plus souvent connectée au porte-effecteur par une double articulation lui autorisant un mouvement de rotation autour de Z, dit axe C, et une seconde articulation lui

autorisant un mouvement selon un axe perpendiculaire à Z, dit axe A.

Les déplacements selon les axes linéaires X, Y et Z permettent de décrire n'importe quelle trajectoire dans l'espace de travail de la machine. Les déplacements selon les axes de rotation A et C permettent d'orienter la tête de drapage de sorte que la génératrice de contact du rouleau de drapage avec la surface du mandrin soit perpendiculaire à la trajectoire. Pour draper une surface cylindrique, un mandrin (5) de forme appropriée est placé sur la table et la tête de drapage est déplacée à la surface de ce mandrin de sorte à y déposer des bandes de fibres. Lesdites bandes adhèrent au mandrin par la pégosité naturelle à la température de dépose de la résine qui les imprègne.

La surface maximale qu'il est ainsi possible de draper est donnée par les courses des axes. En prenant les positions extrêmes (3,3', 3") de la tête de drapage dans un plan YZ, le volume (6) accessible pour une surface cylindrique couvrant un secteur angulaire de 180° n'atteint pas 25% du volume intérieur (7) de la machine. Ce volume est encore réduit si le secteur angulaire couvert par le panneau est supérieur à 180°. Par conséquent, lorsque l'opération de drapage a pour objet la réalisation d'un panneau cylindrique de grandes dimensions tel qu'un panneau de fuselage d'un aéronef, le volume de la machine adaptée à cette opération devient rapidement très important, et, pour conserver leur rigidité, les éléments constitutifs d'une telle machine doivent être surdimensionnés. On se trouve alors en présence de masses à déplacer importantes ce qui est défavorable pour la vélocité et donc pour la productivité de ladite machine.

Figure 2, selon un mode particulier de réalisation de l'invention, la machine comprend une base (10) s'étendant dans le plan XY, un portique (20) s'étendant dans le plan YZ et mobile en translation selon X par rapport à la base (10) et un porte-effecteur (30) se déplaçant le long de ce portique. Alors que selon l'art antérieur le porte-effecteur ne se déplace que selon l'axe Y sur la traverse (2) du portique, le porte effecteur (30) de la machine selon l'invention est apte à se déplacer le long de l'ensemble du portique (20). A cette fin ledit portique (20) comprend au moins une portion circulaire d'axe de giration parallèle à l'axe X et placé entre ledit portique et la table (10) de la machine. Dans l'exemple de réalisation de la figure 2 le portique est de forme entièrement circulaire et couvre un secteur angulaire supérieur à 180°. Le mandrin (5) étant placé fixe sur la table (10), le porte-effecteur, muni de la tête de drapage (40), peut tourner autour de l'axe de la surface cylindrique du mandrin en suivant une piste (210) le long de ce portique. Pour des pièces de très grande dimension, la machine peut comprendre plusieurs portiques, équipés chacun d'un porte-effecteur et d'une tête de drapage et qui peuvent draper simultanément des couches à la surface de la pièce afin d'augmenter la productivité. Alternativement les différents portiques peuvent être équipés d'effecteurs différents par exemple, une tête de drapage, une tête de piquage ou une tête de contrôle par ultrasons ou tout autre dispositif.

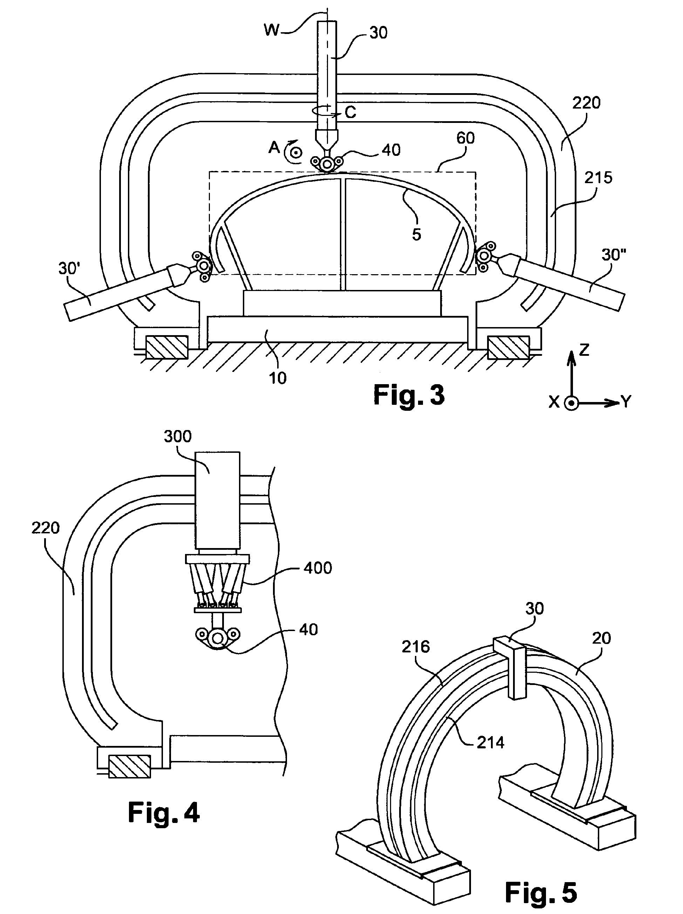

Figure 3, selon un cas plus général de réalisation de l'invention, le portique (220) est de forme quelconque mais s'étend selon le plan XY de la machine et comprend au moins une portion circulaire permettant au porte-effecteur (30) d'effectuer, en suivant le portique, une trajectoire non parallèle à l'axe Y de la machine. Lors de son déplacement, le porte-effecteur (30) suit une piste sur ce portique. La piste assure le guidage du porte-effecteur. Elle peut être avantageusement réalisée par un rail de guidage de type HMG distribué par la société THK®. Le déplacement le long de ce rail peut être réalisé par tout moyen connu de l'homme du métier, notamment par un dispositif pignon-crémaillère. Selon un mode de réalisation plus avantageux, le déplacement le long de la piste et communiqué au porte-effecteur (30) par un moteur linéaire (215) disposé le long de la piste. Avantageusement le dispositif comprend aussi un codeur linéaire permettant de connaitre la position exacte du porte-effecteur le long de ladite piste. Selon un premier mode de réalisation de l'entraînement, les aimants permanents, constituant le secondaire du moteur linéaire (215), sont disposés sur le portique, perpendiculairement à la courbe contenue dans le plan YZ de la machine et correspondant à la trajectoire, leur face supérieure étant parallèle au plan YZ et en vis à vis des bobines constituant le primaire du moteur disposées dans le porte effecteur. Alternativement, figure 5, les moteurs linéaires (216) peuvent être disposés sur la tranche du portique. Dans ce cas, le rail de guidage (214) est de préférence conservé dans le plan XY.

Le porte-effecteur (30) comprend un axe de déplacement de l'effecteur (40) parallèlement au plan XY du portique dit axe W et avantageusement la tête de drapage (40) est articulée en extrémité du porte-effecteur selon un axe C confondu avec W et un axe A perpendiculaire à ce dernier. Ainsi, bien que la trajectoire du porte-effecteur dans le plan XY soit contrainte par la forme de la piste, la trajectoire suivie par l'effecteur est modulée par le déplacement de celui-ci selon W. Par exemple, l'effecteur peut dans l'espace de travail de la machine, figure 2, suivre une trajectoire correspondant aux faces d'un cube alors que les portiques sont de forme circulaire. Les axes de rotation permettent au cours de ces trajectoires, d'orienter la tête de sorte que les conditions d'orientation de celle-ci par rapport à la trajectoire soient respectées..

Le déplacement du porte-effecteur le long de la piste permet d'obtenir des vitesses d'avance travail sur la surface cylindrique du mandrin (5) comparables à ce qui est obtenu en drapage plan.

Figure 3 le volume de travail accessible (6) pour le drapage d'un mandrin cylindrique (5) atteint plus de 40% du volume intérieur de la machine.

Selon un autre mode de réalisation dont la figure 4 expose un exemple, le porte effecteur (300) est prolongé par un dispositif (400) à chaîne cinématique fermée ou parallèle. Un tel dispositif, constitué par exemple d'un hexapode, est capable de déplacer l'effecteur (40) selon 6 degrés de liberté mais selon des amplitudes réduites. Selon ce mode de réalisation le porte-effecteur peut comporter ou non un axe de déplacement W et le dispositif à cinématique parallèle (400) peut être connecté au porte-effecteur par une articulation d'axe C. Les déplacements, mêmes limités en amplitude, autorisés par le dispositif à cinématique parallèle peuvent être mis à profit pour la réalisation, sur le panneau composite, de motifs de drapage localisés tels que des patchs ou des renforts d'épaisseur locaux.

Les mouvements de la machine sont pilotés par une commande numérique (non représentée). Un module de calcul de cinématique inverse est classiquement intégré à cette commande numérique ce qui permet de piloter la machine selon un programme, dit ruban, rédigé en code ISO standard, les ordres de déplacement étant exprimés dans l'espace d'origine pièce et traduits par le module de calcul en combinaisons de déplacement selon les différents axes de la machine. Ledit module de calcul comprend les algorithmes permettant de lever les ambiguïtés cinématiques éventuelles liées aux redondances des mouvements ou à des points singuliers. Alternativement, ou de manière complémentaire la cinématique particulière de la machine peut être intégré dans le post-processeur d'un système de fabrication assisté par ordinateur adapté au procédé de drapage. Ainsi, la cinématique particulière de la machine ne rend pas la programmation de la machine plus complexe que celle d'une machine 5 ou 6 axes de l'art antérieur.

La description ci-avant illustre clairement que par ses différentes caractéristiques et leurs avantages, la présente invention atteint les objectifs qu'elle s'était fixée. En particulier, elle permet le drapage de pièces composites cylindriques de grandes dimensions en réduisant le volume de travail de la machine par rapport au volume de l'outillage nécessaire à la réalisation de ces pièces sans mettre ledit mandrin en rotation. Elle permet par ailleurs d'atteindre des productivités et des qualités de dépose comparables à ce qu'il est possible d'obtenir en drapage plan.

## Revendications

1. Machine-outil adaptée au drapage de plis d'un matériau composite comprenant :
- une table fixe (1, 10) définissant un plan de base, apte à recevoir un mandrin de drapage (5) ;
- un portique (20, 220, 210) s'étendant dans un plan perpendiculaire au plan de base et apte à se déplacer selon un axe longitudinal (x) rectiligne perpendiculaire au plan du portique et parallèle au plan de base comprenant une piste de guidage d'un porte effecteur (30), laquelle piste comporte au moins une portion circulaire de rayon fini dont l'axe de giration est parallèle à l'axe longitudinal ;
- un porte-effecteur (30) apte à supporter une tête de drapage (40) et apte à se déplacer à une vitesse d'avance travail dans le plan du portique le long de la piste (210), placé entre la piste (210) et la table (10) ;
**caractérisée en ce que** la somme des secteurs angulaires des portions circulaires de la piste (210) est supérieure à 180°.

2. Machine selon la revendication 1 **caractérisée en ce qu'**elle ne comprend qu'une seule piste circulaire (210).

3. Machine selon la revendication 1 **caractérisée en ce que** le déplacement du porte effecteur (30) par rapport au portique (220) est réalisé par un moteur linéaire (215) suivant la piste (210).

4. Machine selon la revendication 1 **caractérisée en ce que** le porte effecteur (30) comprend un axe de déplacement rectiligne de l'effecteur, dit axe W, parallèle au plan du portique et perpendiculaire à la piste (210).

5. Machine selon la revendication 4 **caractérisée en ce que** le porte-effecteur (30) comprend un axe de déplacement rotatif (C) de l'effecteur autour de l'axe W.

6. Machine selon la revendication 1 **caractérisée en ce que** le porte-effecteur (30,300) comprend un dispositif de déplacement de l'effecteur selon au moins deux axes de rotation (A, C) et une translation (W) selon un axe perpendiculaire à la piste (210) et parallèle au plan du portique.

7. Machine selon la revendication 6 **caractérisée en ce que** le dispositif de déplacement de l'effecteur comprend une chaîne cinématique fermée (400).

## Claims

1. A machine tool suitable for wrapping pleats of a composite material comprising:
- a fixed table (1, 10) defining a basic plane, capable of receiving a pleat-wrapping chuck (5) ;
- an arched support (20, 220, 210) extending in a plane perpendicular to the basic plane and capable of moving along a rectilinear longitudinal axis (x) perpendicular to the plane of the arched support and parallel to the basic plane comprising a track for guiding an effector carrier (30), which track comprises at least a finite-radius circular portion of which the axis of gyration is parallel to the longitudinal axis;
- an effector carrier (30) capable of supporting a pleating head (40) and capable of moving at a working travel speed in the plane of the arched support along the track (210), placed between the track (210) and the table (10);
**characterized in that** the total of the angular sectors of the circular portions of the track (210) is greater than 180°.

2. Machine according to Claim 1, **characterized in that** it comprises only one circular track (210).

3. Machine according to Claim 1, **characterized in that** the effector carrier (30) is moved relative to the arched support (220) by a linear motor (215) along the track (210).

4. Machine according to Claim 1, **characterized in that** the effector carrier (30) comprises an axis of rectilinear movement of the effector, called the W axis, parallel to the plane of the arched support and perpendicular to the track (210).

5. Machine according to Claim 4, **characterized in that** the effector carrier (30) comprises an axis of rotary movement (C) of the effector about the W axis.

6. Machine according to Claim 1, **characterized in that** the effector carrier (30, 300) comprises a device for the movement of the effector along at least two rotary axes (A, C) and one translation axis (W) along an axis perpendicular to the track (210) and parallel to the plane of the arched support.

7. Machine according to Claim 6, **characterized in that** the device for the movement of the effector comprises a closed kinematic chain (400).

## Patentansprüche

1. Werkzeugmaschine, die zum Verlegen von Lagen eines Verbundmaterials geeignet ist, die enthält:
- einen eine Basisebene definierenden ortsfesten Tisch (1, 10), der einen Verlege-Formkern (5) aufnehmen kann;
- einen Portalrahmen (20, 220, 210), der sich in einer Ebene lotrecht zur Basisebene erstreckt und sich gemäß einer geradlinigen Längsachse (x) lotrecht zur Ebene des Portalrahmens und parallel zur Basisebene verschieben kann, der eine Führungsbahn eines Effektor-Trägers (30) enthält, wobei die Bahn mindestens einen kreisförmigen Abschnitt mit endlichem Radius aufweist, dessen Hochachse parallel zur Längsachse ist;
- einen Effektor-Träger (30), der einen Verlegekopf (40) tragen und sich mit einer Arbeitsvorschubgeschwindigkeit in der Ebene des Portalrahmens entlang der Bahn (210) bewegen kann, der zwischen der Bahn (210) und dem Tisch (10) angeordnet ist;
**dadurch gekennzeichnet, dass** die Summe der Winkelsektoren der kreisförmigen Abschnitte der Bahn (210) höher als 180° ist.

2. Maschine nach Anspruch 1, **dadurch gekennzeichnet, dass** sie nur eine kreisförmige Bahn (210) enthält.

3. Maschine nach Anspruch 1, **dadurch gekennzeichnet, dass** die Verschiebung des Effektor-Trägers (30) bezüglich des Portalrahmens (220) von einem Linearmotor (215) durchgeführt wird, der der Bahn (210) folgt.

4. Maschine nach Anspruch 1, **dadurch gekennzeichnet, dass** der Effektor-Träger (30) eine geradlinige Verschiebeachse des Effektors, W-Achse genannt, parallel zur Ebene des Portalrahmens und lotrecht zur Bahn (210) enthält.

5. Maschine nach Anspruch 4, **dadurch gekennzeichnet, dass** der Effektor-Träger (30) eine Drehverschiebungsachse (C) des Effektors um die W-Achse enthält.

6. Maschine nach Anspruch 1, **dadurch gekennzeichnet, dass** der Effektor-Träger (30, 300) eine Verschiebevorrichtung des Effektors gemäß mindestens zwei Drehachsen (A, C) und einer Translationsrichtung (W) gemäß einer Achse lotrecht zur Bahn (210) und parallel zur Ebene des Portalrahmens enthält.

7. Maschine nach Anspruch 6, **dadurch gekennzeichnet, dass** die Verschiebevorrichtung des Effektors eine geschlossene kinematische Kette (400) enthält.
